Europäisches Patentamt

European Patent Office

Office européen des brevets

(11) Publication number: **0 105 312**
**B1**

(12) **EUROPEAN PATENT SPECIFICATION**

(45) Date of publication of the patent specification:
**02.07.86**

(51) Int. Cl.⁴: **A 23 C 13/14**

(21) Application number: **83901247.3**

(22) Date of filling: **30.03.83**

(86) International application number:
**PCT/SE 83/00121**

(87) International publication number:
**WO 83/03337 (13.10.83 Gazette 83/24)**

(54) METHOD OF IMPROVING THE WHIPPING PROPERTIES OF CREAM.

| | |
|---|---|
| (30) Priority: **01.04.82 SE 8202102** | (73) Proprietor: **ALFA- LAVAL AB, Box 500, S-147 00 Tumba (SE)** |
| (43) Date of publication of application:<br>**18.04.84 Bulletin 84/16** | (72) Inventor: **ANDERSSON, Kenneth, Blavingevägen 29, S-240 17 S. Sandby (SE)**<br>Inventor: **PIHL, Per, Ädelstensvägen 17, S-222 51 Lund (SE)** |
| (45) Publication of the grant of the patent:<br>**02.07.86 Bulletin 86/27** | |
| (84) Designated Contracting States:<br>**DE FR GB NL** | (74) Representative: **Lerwill, John, A.A. Thornton & Co. Northumberland House 303- 306 High Holborn, London, WC1V 7LE (GB)** |
| (56) References cited:<br>**SE-B-324 945**<br><br>**Derwent's abstract No. 29031 B/15, Su 426 381** | |

LIBER, STOCKHOLM 1986

EP 0 105 312 B1

**Description**

The present invention relates to a method of improving the whipping properties of cream by adding a traction of buttermilk to the cream.

Two processes run in parallel when cream is whipped. The first one consists of beating air into the cream and gradually atomizing the air into smaller and smaller bubbles. The second one is causing fat globules in the cream to stick together to form aggregates with increasing size.

During the whipping, a two phase system is formed in which air is the disperse phase and cream the continuous phase. In the continuous phase the fat globules become packed such that they form a supporting skeleton. If the supporting skeleton is to form it is necessary that:

a. the fat is crystallized; and

b. aggregate forming agents are available.

The skeleton must be rigid and kept together by aggregate forming substances. These substances are found in the membranes of the fat globules. The membranes consist of two different types of lipoprotein complex with differing solubility in water. The inner layer of the membranes consists of the lipides which have the least polar properties. The outer layer consists of phospholipides with hydrophile groups to which further proteins are bound. These aggregates of phospholipides and proteins are key components required in order to obtain a sufficient aggregate state of the fat globules.

The possibility to whip cream diminishes at a lower fat content. In order to obtain a stable foam, a fat content of 35-40% fat is needed. At a lower fat content there is not a sufficient amount of the aggregate forming substances mentioned above. If one wants to produce cream which may be whipped with a lower fat content, aggregate forming substances, for example monoglycerides, must be added. Such substances may however change the taste of the cream.

Attempt has been made to obtain naturally occurring aggregate forming components from milk, which components have been mixed with cream with a low fat content. Such a procedure is described in Norwegian patent publication 118 019. According to the patent publication cream with a fat content over 30 percent by weight is mixed with buttermilk in such a relation that a cream with a fat content of 17-28% is obtained. According to the patent publication it is possible to whip this cream. A mixture with a corresponding amount of skim-milk gives a cream, which is impossible to whip. The reason for this should be that while skim-milk has a content of phospholipies of 0,01-0,02%, buttermilk with the same fat content contains 10 times more phospholipides.

In the Swedish patent publication 391 633 there is described another way of obtaining a cream, which is whippable with a low fat content. In this case, from cream having a fat content of at least 30 percent by weight there is separated a fat rich fraction with a fat content of over 90 percent by weight. The fraction rich in fat is separated to such a degree that the remaining water containing fraction consists of a cream, which is whippable. Separation takes place in an homogenizer. According to the patent publication the fact that the cream is whippable depends on a complex compound of phospholipides and proteins, which complex easily breaks down. When carrying through a total phase change and separation of clean butteroil, the complex compound will still be left in the water containing fraction.

Swedish patent publication 362 343 describes another method of producing whippable cream. According to this method a fraction containing membrane substance is added to cream, which fraction has been obtained by centrifuging melted butter. Cream with a fat content of at least 30 percent by weight is mixed with the fraction containing membrane substance thus obtained, and which has a low fat content, to yield a mixture with a fat content of 20-25 percent by weight of the mixture. Butter oil is obtained as a by-product.

The patents which have been mentioned above were applied for in the middle and end of the nineteen sixties, but the described methods have not been used industrially. Problems are encountered in obtaining a whippable cream with a stable foam. No whippable cream with a low fat content is to be found on the market today having whipping properties improved by addition of a buttermilk fraction.

In a report 242 Account from Statens Forsogsmejeri, Hillerod, Denmark, entitled "The emulsion stability of whipping cream", the alleged positive effect of an addition of sweet buttermilk on the whipping properties of the cream is questioned, since no amendment of the whipping properties of the cream have been obtained by adding a concentrate of buttermilk obtained by ultrafiltration.

Surprisingly a method has been found of obtaining a concentrate from buttermilk, which when mixed with cream gives a stable foam. Thus according to the invention there is provided a method of improving the whipping properties of cream by addition of a fraction of buttermilk to the cream, characterized in that a concentrate of buttermilk is obtained by ultrafiltration and is made acid to a pH lower than 4.0, preferably 3.8, the acid concentrate is mixed with cream having a desired fat content, the acid concentrate being added in an amount of 5-15% of the amount of cream, and the mixture is neutralized and subject to further treatment as desired.

Addition of the acid concentrate improves the whipping properties of the cream, while addition concentrate which has not been made acid has no effect at all on the whipping properties.

The ultrafiltration is preferably carried out after heating the buttermilk to a temperature within the range of 40-75°C, preferably around 50°C. The starting material is sweet buttermilk or neutralized acid buttermilk. Reconstituted buttermilk made from buttermilk powder may also be used. The buttermilk is concentrated by ultrafiltration in a ratio of 1:4. The obtained buttermilk concentrate is preferably made acid with lactic acid, which means that only

2

naturally occurring milk substances are used for the acidification. Of course, it is possible to use any acid, which is allowed as a food additive. The fat content of the cream is standardized by mixing the cream with skim-milk or lightmilk. The ultrafiltrate, after adjustment of its pH, is added in an amount of 5-15% counted on the cream, which is thereafter neutralized to pH 6.5 with diluted NaOH. The cream produced in the manner described above, and the whipping properties of which have been changed, may thereafter be pasteurized and sterilized.

One may start with cream with a fat content of 40% which is given the desired fat content by mixing with milk, but of course it is also possible to produce cream with the desired fat content directly. The method according to the invention may with advantage be used to produce whippable cream with a fat content as low as 22-26%.

The mechanisms which lie behind the invention are described further below. During the ultrafiltration the buttermilk is concentrated.

| Analysis | Buttermilk | Concentrate | Permeat |
|---|---|---|---|
| Dry substance | 8,5 | 18,0 | 4,5 |
| Phospholipide % | 0,10 | 0,44 | 0,00 |

According to the analysis all phospholipide is obtained in the concentrate.

If UF-concentrated buttermilk, without any adjustment of its acidity, is added to cream there is obtained no alteration to the whippability, which may be seen in the table below.

**Table**

Whipping of cream with a fat content of 22,5% after addition of different amounts of concentrate. Whipping temperature +5°C.

| Sample No. | Added amount of concentrate (%) | Hard-ness | Whipping time (sec) | Increase in volume (%) | Separation of serum (ml) |
|---|---|---|---|---|---|
| 1 | 0 | 10 | 385 | 102 | 23 |
| 2 | 3 | 10 | 373 | 98 | 22 |
| 3 | 6 | 8 | 388 | 92 | 23 |
| 4 | 9 | 6 | 380 | 90 | 23 |

The table shows that addition of buttermilk concentrate obtained directly by ultrafiltration results in an impairment of the properties of the cream at this low fat content. This negative result probably depends on the fact that the active complex between phospholipide and proteins is dissolved.

According to the present invention a method has been found to reform the complex in the UF-concentrated buttermilk by making the concentrate acid before it is added to the cream. The positive effect is also retained after subsequent neutralization of the cream.

The invention is described further with reference to the attached drawings, in which:

Figure 1 shows a flowchart for the production of light cream which is whippable, by a method according to the invention; and

Figures 2 and 3 are graphs from experiments by whipping according to Funke, for samples with addition of UF-concentrate according to the invention and without addition of UF-concentrate.

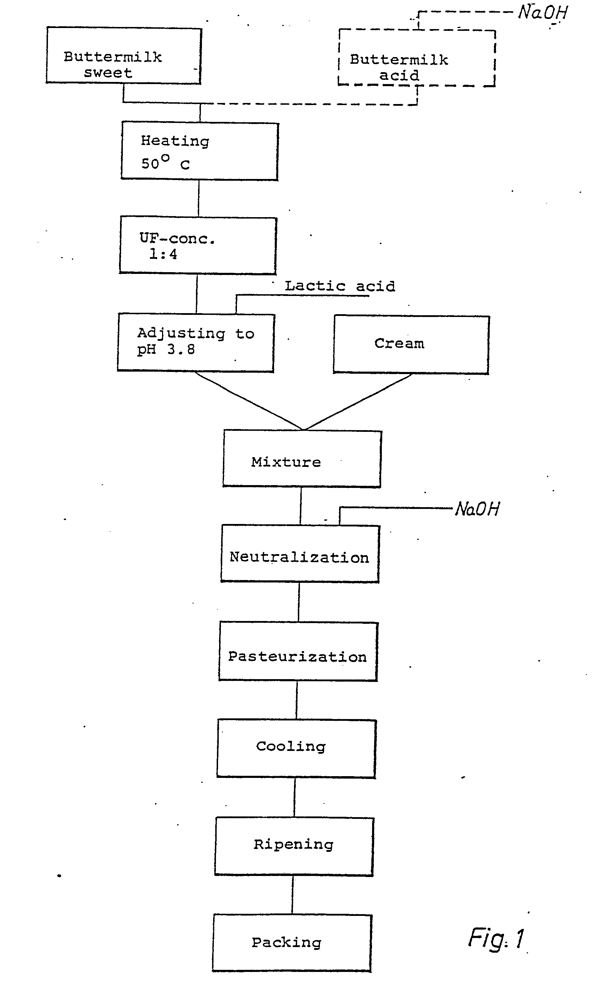

In Figure 1 there are shown the steps, which are needed for the production of cream. Sweet or neutralized buttermilk is heated to 50°C and is ultrafiltrated in a ratio of 1:4. The obtained concentrate is made acid with lactic acid to a pH lower than 4.0. Cream is standardized with skim-milk and is then mixed with concentrate to the desired fat content. The amount of concentrate is 5-15% of the cream. The mixture is thereafter neutralized with NaOH to pH 6.5. The cream is pasteurized, cooled, left to ripen and is packed. The whipping cream according to the invention retains its good whipping qualities in spite of pasteurizing or sterilizing.

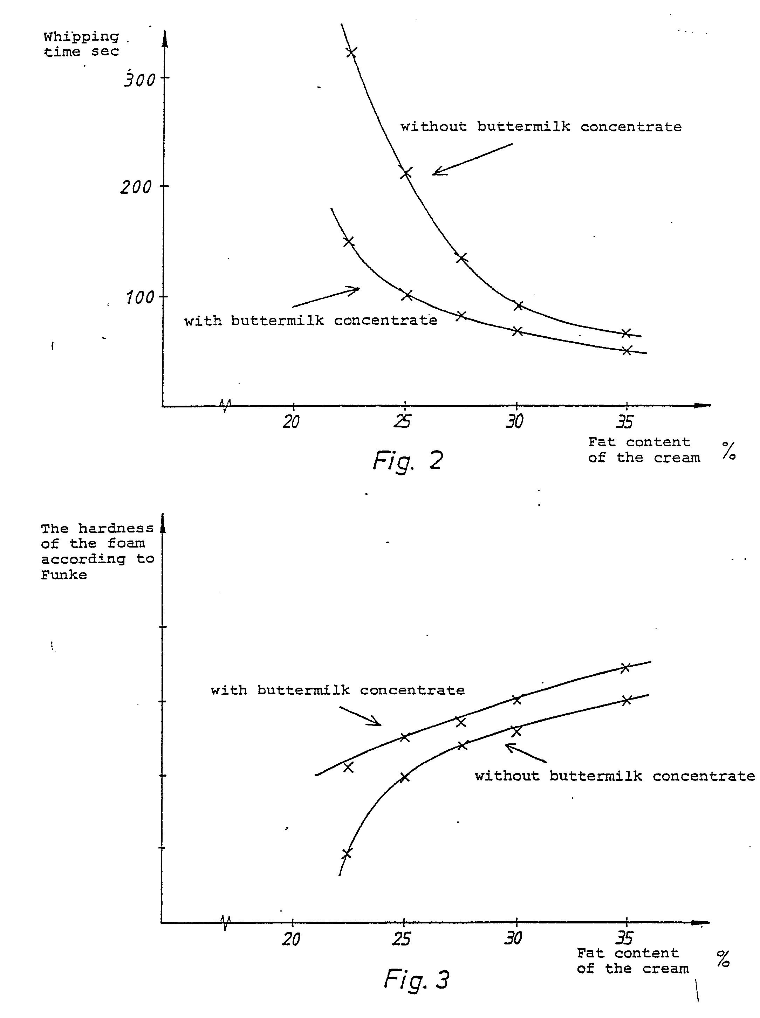

In Figure 2 there is a graph showing the whipping time for cream samples with different fat contents, one curve being for cream samples containing 5% buttermilk concentrate according to the invention, and the other curve for cream samples without addition of buttermilk concentrate. As may be seen from the drawing, the whipping time is reduced considerably by addition of acid concentrate, the difference being greatest at low fat contents.

In Figure 3 there is a graph showing the hardness of the foam according to Funke, one curve relating to cream samples containing 5% buttermilk concentrate according to the invention, and the other curve relating to cream samples without addition of buttermilk concentrate. As may be seen from the drawing, cream foams obtained by the method according to the invention are considerably more stable than cream foams obtained without addition of buttermilk.

It may be seen from Figures 2 and 3 that the addition of acid concentrate has a positive effect at fat contents within the range 22-35%, but the effect is more marked for creams with a low fat content. Consequently, the invention makes it possible to obtain a whippable cream having low fat content.

Also from a manufacturing point of view the proposed invention is beneficial. The acidified buttermilk concentrate has extraordinary keeping qualities and may be transported from butter dairies to dairies, which produce cream, without a diminishing of the quality.

The given limits for the addition of buttermilk concentrate is determined by a lower value, under which no positive effect on the whipping is obtained and an upper value, above which an effect on the taste of the cream sets in, which the consumers may react to.

## Claims

1. A method of improving the whipping properties of cream by addition of a fraction of buttermilk to the cream, characterized in that a concentrate of buttermilk is obtained by ultrafiltration and is made acid to a pH lower than 4.0, preferably 3.8, the acid concentrate is mixed with cream having a desired fat content, the acid concentrate being added in an amount of 5-15% of the amount of cream, and the mixture is neutralized and subject to further treatment as desired.

2. A method according to claim 1, wherein the ultrafiltration is carried out at a temperature within the range of 40-75°C.

3. A method according to claim 2, wherein the ultrafiltration temperature is about 50°C.

4. A method according to any one of claims 1 to 3, wherein the pH of the buttermilk is neutral during the ultrafiltration.

5. A method according to any one of claims 1 to 4, wherein the buttermilk is concentrated by ultrafiltration in a ratio of 1:4.

6. A method according to any one of claims 1 to 5, wherein the buttermilk concentrate is made acid with lactic acid.

7. A method according to any one of claims 1 to 6, wherein the acid concentrate is mixed with cream having a fat content of 22-26% for producing a whippable cream with a low fat content.

## Patentansprüche

1. Verfahren zum Verbessern der Schlageigenschaften von Sahne durch Zugabe einer Buttermilchfraktion zu dieser, dadurch gekennzeichnet, daß man ein Buttermilchkonzentrat durch Ultrafiltrierung herstellt und auf einen pH-Wert unter 4,0, vorzugsweise 3,8 säuert, dann das säure Konzentrat der Sahne mit gewünschtem Fettanteil zumischt, wobei man das saure Konzentrat in einer Menge von 5 - 15% der Sahnemenge zugibt, die Mischung dann neutralisiert und sie der weiteren beliebigen Behandlung zuführt.

2. Verfahren nach Anspruch 1, bei dem man die Ultrafiltierung bei einer Temperatur im Bereich von 40 bis 75°C durchführt.

3. Verfahren nach Anspruch 2, bei dem die Temperatur der Ultrafiltrierung etwa 50°C beträgt.

4. Verfahren nach einem der Ansprüche 1 bis 3, bei dem der pH-Wert der Buttermilch während der Ultrafiltrierung neutral ist.

5. Verfahren nach einem der Ansprüche 1 bis 4, bei dem man die Buttermilch durch die Ultrafiltrierung im Verhältnis 1: 4 konzentriert.

6. Verfahren nach einem der Ansprüche 1 bis 5, bei dem man das Buttermilchkonzentrat mit Milchsäure säuert.

7. Verfahren nach einem der Ansprüche 1 bis 6, bei dem man das saure Konzentrat mit Sahne eines Fettanteils von 22 - 26% zur Herstellung einer schlagbaren Sahne mit niedrigem Fettgehalt zumischt.

## Revendications

1. Procédé permettant d'améliorer les aptitudes de la crème à être fouettée par addition d'une fraction de babeurre à la crème, caractérisé en ce qu'on obtient un concentré de babeurre par ultrafiltration et on le rend acide à un pH inférieur à 4,0, de préférence à 3,8, on mélange le concentré acide à de la crème ayant une teneur en matière grasse désirée, le concentré acide étant ajouté dans une proportion de 5-15% de la quantité de crème, on neutralise le mélange et on le soumet à tout traitement ultérieur désire.

2. Procédé selon la revendication 1, dans lequel l'ultrafiltration est effectuée à une température dans la plage de 40 à 75°C.

3. Procédé selon la revendication 2, dans lequel la température d'ultrafiltration est d'environ 50°C.

4. Procédé selon l'une quelconque des revendications 1 à 3, dans lequel le pH du babeurre est neutre pendant l'ultrafiltration.

5. Procédé selon l'une quelconque des revendications 1 à 4, dans lequel on concentre le babeurre par ultrafiltration dans un rapport de 1:4.

6. Procédé selon l'une quelconque des revendications 1 à 5, dans lequel on rend le concentré de babeurre acide à l'aide d'acide lactique.

7. Procédé selon l'une quelconque des revendications 1 à 6, dans lequel on mélange le concentré acide a de la crème ayant une teneur en matière grasse de 22-26% pour produire une crème fouettable ayant une basse teneur en matière grasse.

Fig. 1

Fig. 2

Fig. 3